# EUROPEAN PATENT APPLICATION

(11) **EP 4 520 694 A1**
(43) Date of publication of application: **12.03.2025**
(21) Application number: 23935877.3
(22) Date of filing: 11.10.2023
(51) Int. Cl.: B65H 5/22, H01M 10/04, B65H 5/02, B65H 7/00

(54) **CONVEYING DEVICE AND LAMINATION APPARATUS**

(30) Priority: 21.07.2023 CN 202321949982 U
(71) Applicant: Wuxi Lead Intelligent Equipment Co., Ltd., Wuxi, Jiangsu 214123 (CN)
(72) Inventor: YANG, Pengfei, Wuxi, Jiangsu 214123 (CN)
(74) Representative: Rau, Schneck & Hübner Patentanwälte Rechtsanwälte PartGmbB
(86) International application number: PCT/CN2023/124067
(87) International publication number: WO 2025/020302

(57) **Abstract**

Disclosed are a transporting apparatus and a stacking device. The transporting apparatus comprises a first conveying mechanism and a second conveying mechanism. The first conveying mechanism is provided with a first conveying surface, a first end and a second end, and the first conveying surface is configured for conveying the pole piece in a direction from the first end toward the second end. The second conveying mechanism is provided at a side of the second end distal to the first end and is reciprocally movable between a first position and a second position. The second conveying mechanism is provided with a second conveying surface, a receiving end and a conveying end, the second conveying surface is configured for conveying the pole piece in a direction from the receiving end toward the conveying end. When the second conveying mechanism is located at the first position, a plane where the second conveying surface is located is coplanar with a plane where the first conveying surface is located.

## Description

### CROSS-REFERENCE TO RELATED APPLICATIONS

The present disclosure claims priority to a Chinese patent application No. 202321949982.X filed with the CNIPA on July 21, 2023 and entitled "TRANSPORTING APPARATUS AND STACKING DEVICE", which is hereby incorporated by reference in its entirety.

### TECHNICAL FIELD

The present disclosure relates to the technical field of battery production device, and particularly to a transporting apparatus and a stacking device.

### BACKGROUND

In the relevant technology, the stacking process involves cutting a pole piece material strip into flake-shaped pole pieces, and then stacking the flake-shaped pole pieces with isolation diaphragms to form a cell. The cells formed by the stacking process have low internal resistance, high charging and discharging power, high stacking utilization rate, large area of pole pieces that can be accommodated, and high energy density.

In the prior art, by providing an inverted belt, the stacking device may reject pole pieces that are defective or out of specification during transporting the pole pieces to achieve waste discharging. However, the method of using the inverted belt for waste discharging is unstable and prone to causing blockages, which in turn affects the stacking efficiency of the stacking device.

### SUMMARY

The present disclosure is directed to alleviating or solving, at least in part, at least one of the above mentioned problems.

The present disclosure proposes a transporting apparatus, comprising: a first conveying mechanism provided with a first conveying surface, a first end and a second end, the first conveying surface being configured for conveying a pole piece in a direction from the first end toward the second end; and a second conveying mechanism which is provided at a side of the second end distal to the first end and is reciprocally movable between a first position and a second position, the second conveying mechanism being provided with a second conveying surface, a receiving end and a conveying end, and the second conveying surface being configured for conveying the pole piece in a direction from the receiving end toward the conveying end; when the second conveying mechanism is located at the first position, a plane where the second conveying surface is located is coplanar with a plane where the first conveying surface is located, and the pole piece is conveyed to the conveying end by the second end via the receiving end, and is output by the conveying end; when the second conveying mechanism is located at the second position, the plane where the second conveying surface is located is parallel to or intersects with the plane where the first conveying surface is located, and the pole piece is output by the second end or the second conveying mechanism.

Optionally, each of the first conveying mechanism and the second conveying mechanism comprises a vacuum belt configured for adsorbing and conveying the pole piece; the first conveying surface is located on the vacuum belt of the first conveying mechanism, and the second conveying surface is located on the vacuum belt of the second conveying mechanism; the transporting apparatus further comprises a scrap box, to which the pole piece is output by the second end or the second conveying mechanism when the second conveying mechanism is at the second position.

Optionally, the second end conveys the pole piece to the receiving end when the second conveying mechanism moves to the first position; the receiving end moves away from the second end and a gap is formed between the receiving end and the second end when the second conveying mechanism moves to the second position.

Optionally, the second conveying mechanism is movable between the first position and the second position along a first direction, the first direction being perpendicular to a direction from the first end towards the second end.

Optionally, the pole piece is output to the scrap box through the gap by the second end when the second conveying mechanism is located at the second position.

Optionally, when the second conveying mechanism is located at the second position, the pole piece is conveyed to the second conveying surface by the second end, and output to the scrap box by the conveying end.

Optionally, when the second conveying mechanism is located at the second position, the pole piece is conveyed to the second conveying surface by the second end, and output to the scrap box by the receiving end.

Optionally, the second conveying mechanism is rotatably provided downstream of the first conveying mechanism, and when the second conveying mechanism rotates to the second position, the pole piece located at the first conveying surface is output into the scrap box through the gap by the second end, and the pole piece located at the second conveying surface is output into the scrap box by the conveying end.

Optionally, the second conveying mechanism is rotatably provided at a side of the second end distal to the first end; the scrap box is provided at a side of the conveying end distal to the receiving end, and when the second conveying mechanism rotates to the second position, the pole piece is conveyed to the receiving end by the second end, and then conveyed into the scrap box via the conveying end.

Optionally, the first conveying mechanism and the second conveying mechanism share one vacuum belt.

Optionally, further comprising a tension adjusting assembly connected to the vacuum belt to regulate tension of the vacuum belt.

Optionally, the tension adjusting assembly comprises:
a bracket; and
a moving assembly movably provided on the bracket, the vacuum belt is connected to the moving assembly, and the moving assembly regulates the tension of the vacuum belt during moving.

Optionally, the moving assembly comprises: a mounting block movably provided on the bracket; and a controlling roller connected to the mounting block, the vacuum belt is connected to the controlling roller, and the mounting block causes the controlling roller to move, so as to regulate the tension of the vacuum belt.

Optionally, the moving assembly further comprises an elastic member connected between the mounting block and the bracket to drive the mounting block to move.

Optionally, further comprising a third conveying mechanism provided at a side, distal to the first conveying mechanism, of the second conveying mechanism located at the first position, the conveying end conveys the pole piece to the third conveying mechanism when the second conveying mechanism moves to the first position.

The present disclosure further provides a stacking device comprising the above transporting apparatus.

Accordingly, in the transporting apparatus and the stacking device provided in the present disclosure, when the second conveying mechanism is at the first position, the first conveying surface of the first conveying mechanism and the second conveying surface of the second conveying mechanism are oriented in the same direction and are coplanar to each other. In other words, the second conveying mechanism is configured in the same manner as the first conveying mechanism, which may avoid the situation that material is blocked between the second conveying mechanism and the first conveying mechanism provided in an inverted manner, and is conducive to improving the conveying efficiency of the transporting apparatus and the stacking efficiency of the stacking device.

### BRIEF DESCRIPTION OF THE DRAWINGS

The foregoing and/or additional aspects and advantages of the present disclosure will become apparent and readily understood from the description of the embodiments in conjunction with the following accompanying drawings, wherein:
FIG. 1 illustrates a structural schematic diagram in which a second conveying mechanism in a transporting apparatus according to an embodiment of the present disclosure is at a first position;
FIG. 2 illustrates a schematic diagram in which the pole piece is output through a gap after a second conveying mechanism in the transporting apparatus according to an embodiment of the present disclosure moves along the first direction to the second position;
FIG. 3 illustrates a schematic diagram in which the pole piece is output by the conveying end after the second conveying mechanism in the transporting apparatus according to an embodiment of the present disclosure moves along the first direction to the second position;
FIG. 4 illustrates a schematic diagram in which the pole piece is output by the receiving end after the second conveying mechanism in the transporting apparatus according to an embodiment of the present disclosure moves along the first direction to the second position;
FIG. 5 illustrates a schematic diagram in which the second conveying mechanism in the transporting apparatus according to an embodiment of the present disclosure rotates to the second position;
FIG. 6 illustrates a schematic diagram in which the second conveying mechanism in the transporting apparatus according to an embodiment of the present disclosure is at the first position and rotates around the receiving end.

Description of reference signs:
1-transporting apparatus;
11-first conveying mechanism; 111-first conveying surface; 112-first end; 113-second end; 114-vacuum belt;
12-second conveying mechanism; 121-first position; 122-second position; 123-second conveying surface; 124-receiving end; 125-conveying end;
13-scrap box; 131-first scrap box; 132-second scrap box;
14-tension adjusting assembly; 141-bracket; 142-moving assembly; 1421-mounting block; 1422-controlling roller; 1423-elastic member;
15-third conveying mechanism;
2-first direction; 21-positive direction; 22-negative direction.

### DETAILED DESCRIPTION

Various exemplary embodiments of the present disclosure will now be described in detail with reference to the accompanying drawings. It is to be noted that unless otherwise specified, the scope of present disclosure is not limited to relative arrangements, numerical expressions and values of components and steps as illustrated in the embodiments.

Description to at least one exemplary embodiment is for illustrative purpose only, and in no way implies any restriction on the present disclosure or application or use thereof.

Techniques, methods and devices known to those skilled in the prior art may not be discussed in detail; however, such techniques, methods and devices shall be regarded as part of the description where appropriate.

In all the examples illustrated and discussed herein, any specific value shall be interpreted as illustrative rather than restrictive. Different values may be available for alternative examples of the exemplary embodiments.

It is to be noted that similar reference numbers and alphabetical letters represent similar items in the accompanying drawings. In the case that a certain item is identified in a drawing, further elaboration thereof may be omitted in the subsequent drawings.

The technical solution of the present disclosure will be further described below with reference to specific embodiments and drawings.

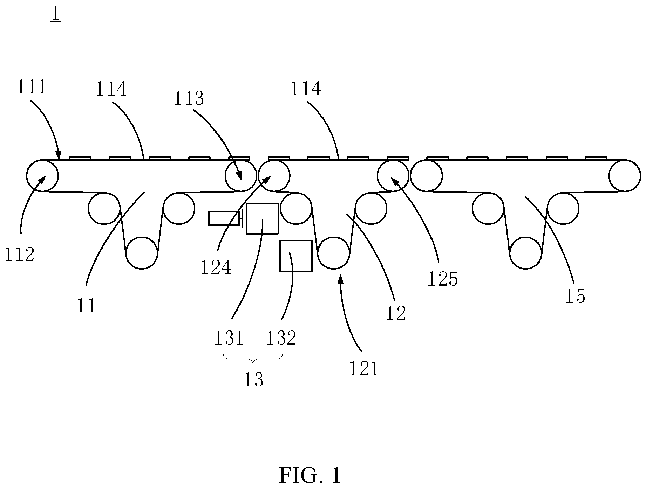

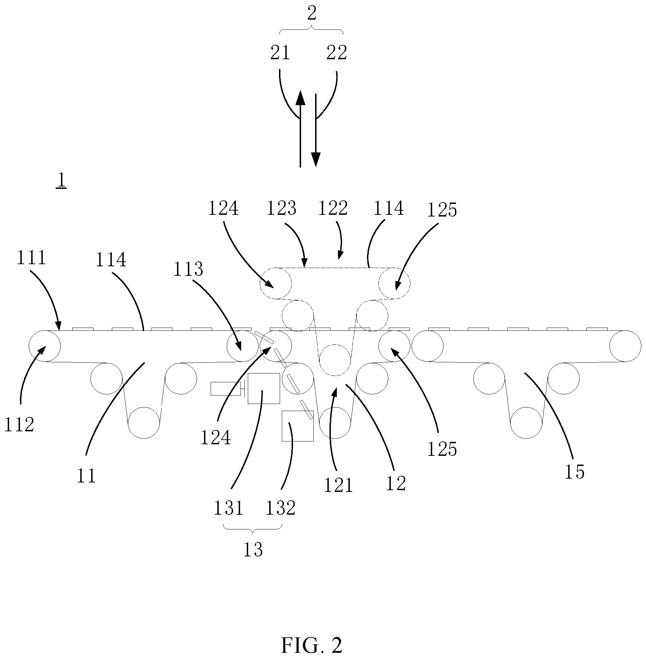

Please refer to FIG. 1, an embodiment of the present disclosure discloses a transporting apparatus 1, which comprises a first conveying mechanism 11 and a second conveying mechanism 12. The first conveying mechanism 11 is provided with a first conveying surface 111, a first end 112 and a second end 113, and the first conveying surface 111 is configured for conveying a pole piece in a direction by the first end 112 toward the second end 113. Please further refer to FIGS. 2 to 5, the second conveying mechanism 12 is provided at a side of the second end 113 distal to the first end 112 and is reciprocally movable between a first position 121 and a second position 122. The second conveying mechanism 12 is provided with a second conveying surface 123, a receiving end 124 and a conveying end 125, and the second conveying surface 123 is configured for conveying the pole piece in a direction from the receiving end 124 toward the conveying end 125. When the second conveying mechanism 12 is located at the first position 121, a plane where the second conveying surface 123 is located is coplanar with a plane where the first conveying surface 111 is located, and the pole piece is conveyed to the conveying end 125 by the second end 113 via the receiving end 124, and is output by the conveying end 125; when the second conveying mechanism 12 is located at the second position 122, the plane where the second conveying surface 123 is located is parallel to or intersects with the plane where the first conveying surface 111 is located, and the pole piece is output by the second end 113 or the second conveying mechanism 12.

The transporting apparatus 1 has two modes: conveying and waste discharging. When the pole piece transported by the transporting apparatus 1 is a qualified pole piece, the transporting apparatus 1 is in the conveying mode, that is, the transporting apparatus 1 plays a conveying role for transporting the qualified pole piece to subsequent processes for further processing; when the pole piece transported by the transporting apparatus 1 is a scrap pole piece, the transporting apparatus 1 is in the waste discharging mode, that is, the transporting apparatus 1 plays a role of waste discharging for outputting the scrap pole piece for recycling treatment.

For example, when the pole piece located at the first conveying mechanism 11 is detected as a qualified pole piece, the second conveying mechanism 12 moves to the first position 121, and at this time, the first conveying mechanism 11 and the second conveying mechanism 12 are in the conveying mode, that is, the first conveying mechanism 11 and the second conveying mechanism 12 transport the qualified pole piece to subsequent processes for further processing; when the pole piece located at the first conveying mechanism 11 is detected as a scrap pole piece, the second conveying mechanism 12 moves to the second position 122, and the first conveying mechanism 11 and the second conveying mechanism 12 switch to the waste discharging mode, that is, the first conveying mechanism 11 conveys the scrap pole piece for recycling treatment, or the first conveying mechanism 11 and the second conveying mechanism 12 convey the scrap pole piece for recycling treatment.

It should be noted that when the second conveying mechanism 12 is at the first position 121, the first conveying surface 111 of the first conveying mechanism 11 and the second conveying surface 123 of the second conveying mechanism 12 at this time are toward the same direction and are coplanar to each other. In other words, the second conveying mechanism 12 is arranged in the same manner as the first conveying mechanism 11 instead of being arranged in the inverted manner. When the first conveying surface 111 and the second conveying surface 123 are toward the same direction and are coplanar to each other, the pole piece is conveyed by the second end 113 of the first conveying mechanism 11 to the receiving end 124 of the second conveying mechanism 12. That is to say, when the pole piece is conveyed from the first conveying surface 111 to the second conveying surface 123, since the contact surface between the pole piece and the first conveying mechanism 11 and the contact surface between the pole piece and the second conveying mechanism 12 are the same, the pole piece will not be blocked between the first conveying mechanism 11 and the second conveying mechanism 12 due to uneven forces on both sides or other factors, that is, there will be no blockage of materials, thereby improving the conveying efficiency of the transporting apparatus 1 and the stacking efficiency of the stacking device. It should be added that when the second conveying mechanism 12 moves to the second position 122, the second conveying mechanism 12 is not in the inverted manner, either.

Furthermore, when the second conveying mechanism 12 moves to the second position 122, the plane where the second conveying surface 123 is located may be parallel to the plane where the first conveying surface 111 is located, that is, a spacing is formed between the plane where the second conveying surface 123 is located and the plane where the first conveying surface 111 is located. The plane where the second conveying surface 123 is located may further intersect with the plane where the first conveying surface 111 is located, in other words, an angle is formed between the plane where the second conveying surface 123 is located and the plane where the first conveying surface 111 is located, that is, the plane where the second conveying surface 123 is located is inclined relative to the plane where the first conveying surface 111 is located.

It can be understood that the aforementioned qualified pole piece or scrap pole piece may be automatically detected by an intelligent device, or detected manually, which is not limited herein.

Please refer to FIG. 1 again, in the present embodiment, each of the first conveying mechanism 11 and the second conveying mechanism 12 comprises a vacuum belt 114, which is configured for adsorbing and conveying the pole piece; the first conveying surface 111 is located on the vacuum belt 114 of the first conveying mechanism 11, and the second conveying surface 123 is located on the vacuum belt 114 of the second conveying mechanism 12. Please further refer to FIGS. 2 to 5, the transporting apparatus 1 further comprises a scrap box 13. When the second conveying mechanism 12 is at the second position 122, the pole piece is output by the second end 113 or the second conveying mechanism 12 to the scrap box 13.

Both the first conveying mechanism 11 and the second conveying mechanism 12 use the vacuum belt 114 to transport the pole piece. Specifically, in addition to the vacuum belt 114, the first conveying mechanism 11 and the second conveying mechanism 12 further comprise a vacuum chamber, with the vacuum belt 114 wrapped around the vacuum chamber. The vacuum belt 114 is provided with a through-hole that is in communication with the vacuum chamber, and the vacuum chamber creates a negative pressure. When the pole piece is located on the vacuum belt 114, and the surface of the pole piece contacting the vacuum belt 114 fits into the through-hole, the pole piece is adsorbed onto the vacuum belt 114 by the negative pressure, allowing the pole piece to be adsorbed onto the vacuum belt 114 and transported by the vacuum belt 114. By using the vacuum belt 114 for transportation and transporting the pole piece relatively stable by adsorption, it is thus possible to increase both the transportation rate and the transportation efficiency.

When the transporting apparatus 1 conveys the scrap pole piece for recycling treatment, the scrap pole piece may be collected in the scrap box 13 for centralized processing. For example, when the pole piece at the first conveying mechanism 11 is detected as a scrap pole piece, the second conveying mechanism 12 moves to the second position 122, and at this time, the first conveying mechanism 11 and the second conveying mechanism 12 are switched to the waste discharging mode, that is, the first conveying mechanism 11 conveys the scrap pole piece into the scrap box 13, or the first conveying mechanism 11 and the second conveying mechanism 12 convey the scrap pole piece into the scrap box 13 for recycling treatment.

It can be understood that in the previous process of making the pole piece, the pole piece may not meet specifications or performance standards for different reasons, such that the pole piece becomes a scrap pole piece and needs to be recycled. In addition, the scrap pole piece may be divided into at least two categories: the first category of the scrap pole piece may be that with a surface defect, and the second category of the scrap pole piece may be that with a size defect. Of course, the scrap pole piece may further be divided into other categories, which is not limited herein. In order to improve the efficiency of subsequent treatment of the scrap pole piece after being recycled, the scrap box 13 may further be correspondingly distinguished according to different classifications of the scrap pole piece. For example, the scrap box 13 may comprise a first scrap box 131 and a second scrap box 132. The first scrap box 131 is used to recycle the scrap pole piece with the surface defect, and the second scrap box 132 is used to recycle the scrap pole piece with the size defect. The above method of collecting different kinds of the scrap pole pieces correspondingly by different scrap boxes 13 prevents the mixing of different kinds of the scrap pole pieces, avoids the need to classify the scrap pole pieces in the subsequent processing of the scrap pole pieces, and thereby avoids a decrease in the efficiency of subsequent processing of the scrap pole pieces.

Of course, in some other embodiments, the first conveying mechanism 11 and the second conveying mechanism 12 may further adopt other ways of transporting the pole pieces such as a chain transmission, which is not limited herein.

Please refer to FIG. 1, in some implementations, when the second conveying mechanism 12 moves to the first position 121, the second end 113 conveys the pole piece to the receiving end 124; pleaser further refer to FIGS. 2 to 5, when the second conveying mechanism 12 moves to the second position 122, the receiving end 124 moves away from the second end 113 and a gap is formed between the receiving end 124 and the second end 113.

It can be understood that the second end 113 of the first conveying mechanism 11 and the receiving end 124 of the second conveying mechanism 12 may be provided in a separated state, that is, when the second conveying mechanism 12 is at the first position 121, the receiving end 124 is adjacent to and engaged with the second end 113. That is to say, the pole piece may be conveyed by the second end 113 to the receiving end 124, and when the second conveying mechanism 12 moves from the first position 121 to the second position 122, a gap is formed between the receiving end 124 and the second end 113 as the second conveying mechanism 12 moves, so that the second end 113 is spaced from the receiving end 124, i.e., the pole piece cannot be conveyed by the second end 113 to the receiving end 124.

In some other implementations, the receiving end 124 of the second conveying mechanism 12 may be continuously engaged with the second end 113 of the first conveying mechanism 11, that is, the receiving end 124 is not spaced from the second end 113 as the second conveying mechanism 12 moves.

Please further refer to FIGS. 2, 3 and 4, in some implementations, the second conveying mechanism 12 may move between the first position 121 and the second position 122 along the first direction 2, and the first direction 2 is perpendicular to the direction of the first end 112 toward the second end 113.

It can be understood that when the second conveying mechanism 12 is at the first position 121, the direction that the first conveying mechanism 11 and the second conveying mechanism 12 convey pole pieces may be regarded as the conveying direction of transporting apparatus 1. The apparatus 1 may also be provided with additional apparatuses at locations along the conveying direction for the subsequent processing of qualified pole pieces. That is to say, the second conveying mechanism 12 may also be provided with other apparatuses on the side distal to the first conveying mechanism 11 for the subsequent processing of the qualified pole piece conveyed by the second conveying mechanism 12. Of course, the second conveying mechanism 12 may also be provided with other conveying mechanisms on the side distal to the first conveying mechanism 11, which is not limited herein.

Thus, the second position 122 is provided in the first direction 2 of the first position 121 such that the second conveying mechanism 12 moves between the first position 121 and the second position 122 along the first direction 2, i.e., the second conveying mechanism 12 is configured for moving in a first direction 2 perpendicular to a direction of the first end 112 toward the second end 113, which not only causes a gap to be formed between the receiving end 124 and the second end 113 and separate them, but also avoids the moving path of the second conveying mechanism 12 from influencing the first conveying mechanism 11 and the apparatus provided at the side of the second conveying mechanism 12 distal to the first conveying mechanism 11.

In some other implementations, the second conveying mechanism 12 may also move in the conveying direction, i.e., in the direction of the first end 112 toward the second end 113, and of course, the second conveying mechanism 12 may also move in other conveying directions, which is not limited herein.

Please refer to FIG. 2 again, in a first implementation, when the second conveying mechanism 12 is at the second position 122, the pole piece is output by the second end 133 to the scrap box 13 via the gap.

For example, the second position 122 may be provided in the positive direction 21 of the first position 121 along the first direction 2, and when the second conveying mechanism 12 is at the second position 122, a gap is formed between the second end 113 and the receiving end 124, allowing the pole piece to pass through. At this time, the scrap box 13 may be provided in the opposite direction 22 of the first position 121 along the first direction 2.

It can be understood that in order to ensure the stability of the pole piece during transportation, that is, in order to prevent the pole piece from deviating or even detaching from the vacuum belt 114 during transportation, the direction from the first end 112 toward the second end 113 may be a horizontal direction, then the first direction 2 is a vertical direction. At this time, the second position 122 is located above the first position 121, and the scrap box 13 when being at the first position 121 is provided below the second conveying mechanism 12.

At this time, in the process of transporting the scrap pole piece by the second end 113 to the scrap box 13 through the gap, the method of the scrap pole piece freely falling into the scrap box 13 under the action of gravity may be adopted. In other words, when the second end 113 conveys the scrap pole piece through the gap, the scrap pole piece may detach from the second end 113 and freely fall under the action of gravity. At the same time, the scrap box 13 is provided on the falling path of the scrap pole piece, such that the scrap pole piece falls into the scrap box 13 after passing through the gap.

It can be understood that in order to classify and collect the scrap pole pieces of different types by the scrap box 13, the scrap box 13 may comprise a first scrap box 131 and a second scrap box 132. The first scrap box 131 is used to recycle the scrap pole piece with the surface defect, and the second scrap box 132 is used to recycle the scrap pole piece with the dimension defect. The second scrap box 132 is provided on the falling path of the scrap pole piece, the first scrap box 131 is movably provided above the second scrap box 132, and the falling path of the scrap pole piece intersects with the moving path of the first scrap box 131. When the scrap pole piece is detected as a scrap pole piece with surface defect, the first scrap box 131 moves to the falling path of the scrap pole piece, allowing the scrap pole piece with the surface defect to fall into the first scrap box 131; when the scrap pole piece is detected as a scrap pole piece with dimension defect, the first scrap box 131 moves to other positions in the moving path, allowing the scrap pole piece with the dimension defect to fall into the second scrap box 132.

Of course, the method of transportation by an intermediate conveying mechanism may also be adopted, that is, the second end 113 transports the scrap pole piece to an intermediate conveying mechanism, and the intermediate conveying mechanism transports the scrap pole piece into the scrap box 13, which is not limited herein.

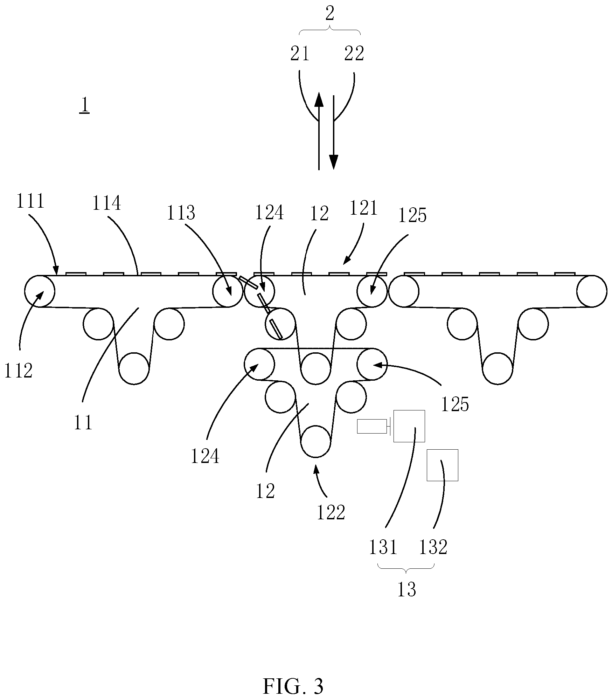

Please refer to FIG. 3 again, in the second implementation, when the second conveying mechanism 12 is at the second position 122, the pole piece is transported by the second end 113 to the second conveying surface 123 and is output to the scrap box 13 by the conveying end 125.

For example, the second position 122 may be provided in the opposite direction 22 of the first position 121 along the first direction 2, and the scrap box 13 may be provided on the side distal to the first conveying mechanism 11 of the second conveying mechanism 12 at the second position 122.

When the pole piece on the first conveying mechanism 11 is detected as a scrap pole piece, the second conveying mechanism 12 moves from the first position 121 to the second position 122 in the opposite direction 22 of the first direction 2, thereby forming a gap between the receiving end 124 and the second end 113. At this time, although the gap is formed between the second end 113 and the receiving end 124, the scrap pole piece does not pass by the gap when output by the second end 113, instead, it is transported by the second end 113 to the second conveying surface 123, and is output by the conveying end 125 to the scrap box 13 along the conveying direction of the second conveying surface 123. It should be noted that it is likely that the pole pieces at the first conveying mechanism 11 are detected as including both scrap pole pieces and qualified pole pieces. When the qualified pole pieces move to the conveying end 125, the second conveying mechanism 12 is at the first position 121, and the qualified pole pieces continue to be conveyed from the conveying end 125 to subsequent procedures for subsequent processing; when the scrap pole pieces moves to the conveying end 125, both the first conveying mechanism 11 and the second conveying mechanism 12 suspend conveying, and after the second conveying mechanism 12 moves from the first position 121 to the second position 122, the second conveying mechanism 12 continues to convey the scrap pole pieces, allowing the scrap pole pieces to be output by the conveying end 125 to the scrap box 13.

Similarly, the way of outputting the scrap pole piece to the second conveying surface 123 by the second end 113, and outputting the scrap pole piece into the scrap box 13 from the conveying end 125 may be free falling, or using the intermediate conveying mechanism for conveyance, which is not elaborated herein.

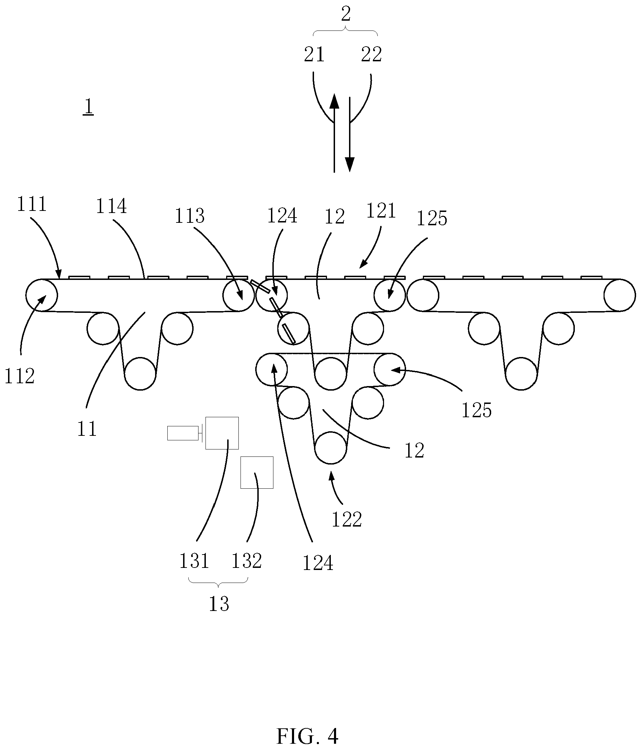

Please refer to FIG.4, in the third implementation, when the second conveying mechanism 12 is at the second position 122, the pole piece is conveyed by the second end 113 to the second conveying surface 123 and is output to the scrap box 13 by the receiving end 124.

For example, when the second position 122 is provided in the opposite direction 22 of the first position 121 along the first direction 2, the scrap box 13 may be provided at the side of the second conveying mechanism 12 close to the first conveying mechanism 11, in other words, the scrap box 13 may be provided at the side of the receiving end 124 distal to the conveying end 125.

When the scrap pole piece is output by the second end 113 to the second conveying surface 123, the implementation of motor reversing may be used to change the conveying direction of the second conveying surface 123. That is, in the conveying mode, the conveying direction of the second conveying surface 123 is in the direction from the receiving end 124 toward the conveying end 125; and in the waste discharging mode, after the motor is reversed, the conveying direction of the second conveying surface 123 is in the direction from the conveying end 125 toward the receiving end 124. At this time, the second conveying surface 123 outputs the scrap pole piece from the receiving end 124 into the scrap box 13 along the changed conveying direction.

Similarly, the implementation of outputting the scrap pole piece by the second end 113 to the second conveying surface 123, and outputting the scrap pole piece from the receiving end 124 into the scrap box 13 may be free falling or using the intermediate conveying mechanism for conveyance, which is not elaborated herein.

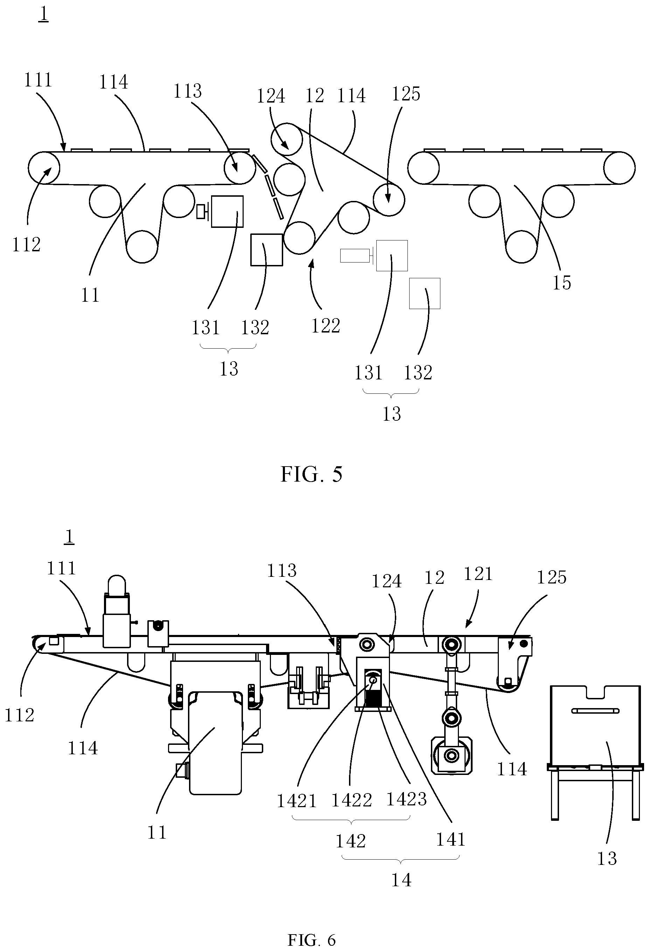

Please refer to FIG.5, in some more specific implementations, the second conveying mechanism 12 may be rotatably provided downstream of the first conveying mechanism 11. When the second conveying mechanism 12 rotates to the second position 122, the pole piece at the first conveying mechanism 11 is conveyed through the gap to the scrap box 13 by the second end 113, and the pole piece at the second conveying mechanism 12 is output into the scrap box 13 by the conveying end 125.

In the present implementation, in order to form a gap between the second end 113 and the receiving end 124 when the second conveying mechanism 12 is rotated from the first position 121 to the second position 122, the rotation axis of the second conveying mechanism 12 thus may be provided at the side of the receiving end 124 distal to the second end 113, and at the same time, the scrap box 13 may be provided on the second end 113 and may be provided on one side of the conveying end 125.

By providing the rotation axis of the second conveying mechanism 12 at a position of the receiving end 124 distal to the second end 113, it is ensured that a gap is formed between the receiving end 124 and the second end 113 when the second conveying mechanism 12 rotates to the second position 122. It should be noted that if there are other apparatuses provided at the side of the conveying end 125 distal to the receiving end 124, a spacing may also be generated between the conveying end 125 and said other apparatuses when the second conveying mechanism 12 rotates to the second position 122. When the second conveying mechanism 12 rotates to the second position 122, the scrap pole piece on the first conveying mechanism 11 is output into the scrap box 13 through the gap by the second end 113, and the scrap pole piece on the second conveying mechanism 12 is output into the scrap box 13 through the spacing from the conveying end 125.

By providing the second conveying mechanism 12 in a rotating manner, it is possible to reduce the space occupied by the second conveying mechanism 12 during movement, and also possible to reduce the complexity of the structural design. At the same time, both the first conveying mechanism 11 and the second conveying mechanism 12 may convey the scrap pole piece into the scrap box 13 through the corresponding gap or interval, which further reduces the accuracy and comprehensiveness of waste discharging, and avoids the possibility of the scrap pole piece being conveyed to the subsequent procedure from the second conveying mechanism 12.

In other more specific implementations, after the scrap pole piece on the first conveying mechanism 11 is conveyed to the second conveying mechanism 12, the second conveying mechanism 12 rotates to the second position 122. At this time, the second conveying mechanism 12 uses the method of motor reversing to change the conveying direction of the second conveying surface 123, such that the scrap pole piece on the first conveying surface 111 is output by the second end 113 to the second conveying surface 123, and then output by the receiving end 124 to the scrap box 13. At the same time, the scrap pole piece on the second conveying surface 123 is directly output to the scrap box 13 by the receiving end 124.

Please refer to FIG. 6, in some other embodiments, the second conveying mechanism 12 is rotatably provided at the side of the second end 113 distal to the first end 112; the scrap box 13 is provided at the side of the conveying end 125 distal to the receiving end 124. When the second conveying mechanism 12 rotates to the second position 122 (not shown in the figure), the scrap pole piece is conveyed by the second end 113 to the receiving end 124, and then conveyed into the scrap box 13 through the conveying end 125.

For example, the receiving end 124 is engaged with the second end 113. In other words, after the second conveying mechanism 12 rotates to the second position 122, the pole piece may also be conveyed by the second end 113 to the receiving end 124. For instance, the receiving end 124 and the second end 113 may be connected with a rotating shaft, and at the same time, the rotation axis of the second conveying mechanism 12 is provided at the receiving end 124, such that during the process of the second conveying mechanism 12 being rotated from the first position 121 to the second position 122, the receiving end 124 and the second end 113 remain continuously engaged, that is to say, there will be no gap or disconnection between the receiving end 124 and the second end 113. When the second conveying mechanism 12 moves to the second position 122, the scrap pole piece is conveyed from the first conveying mechanism 11 to the conveying end 125 of the second conveying mechanism 12, and then conveyed into the scrap box 13 by the conveying end 125. It can be understood that when the side of the second conveying mechanism 12 distal to the first conveying mechanism 11 is provided with other apparatuses, a spacing may be generated between the conveying end 125 and other apparatuses when the second conveying mechanism 12 rotates to the second position 122, and at this time, the conveying end 125 conveys the scrap pole piece to the scrap box 13 through the spacing. Similarly, the scrap pole piece located at the conveying end 125 may fall freely into the scrap box 13, or an intermediate conveying mechanism may be provided in the spacing, to convey the scrap pole piece into the scrap box 13 through the intermediate conveying mechanism, which is not elaborated herein. Of course, it is also possible that the receiving end 124 is not coincide with the second end 113, which is not limited herein.

In some other embodiments, the second conveying mechanism 12 has other means of movement to create a gap between the second end 113 and the receiving end 124, which is not limited herein.

Please continue to refer to FIG. 6, in some more specific embodiments, the first conveying mechanism 11 and the second conveying mechanism 12 share one vacuum belt 114.

The first conveying mechanism 11 and the second conveying mechanism 12 use the same vacuum belt 114 for conveying the pole piece, which may ensure that the pole piece be conveyed from the first conveying mechanism 11 to the second conveying mechanism 12 after the second conveying mechanism 12 rotates to the second position 122.

In further specific embodiments, the first conveying mechanism 11 and the second conveying mechanism 12 may each adopt a separate vacuum belt 114.

Please continue to refer to FIG. 6, in some more specific embodiments, further comprising a tension adjusting assembly 14, which is connected to the vacuum belt 114 so as to regulate the tension of the vacuum belt 114.

The tension adjusting assembly 14 is configured for regulating the tension of the vacuum belt 114 to avoid the vacuum belt 114 from slipping and prevents the conveying efficiency of the transporting apparatus 1 from being influenced.

In other more specific embodiments, it is also possible to regulate the distance between the rotating shafts around which the vacuum belt 114 is wrapped, so as to regulate the tension of the vacuum belt 114.

Please continue to refer to FIG. 6, in some embodiments, the tension adjusting assembly 14 comprises a bracket 141 and a moving assembly 142; the moving assembly 142 is movably provided on the bracket 141, the vacuum belt 114 is connected to the moving assembly 142, and the moving assembly 142 during moving regulates the tension of the vacuum belt 11.

Wherein, the bracket 141 may be provided on the second conveying mechanism 12 or may be provided independently.

By providing the moving assembly 142 on the bracket 141 and connecting the vacuum belt 114 with the moving assembly 142, the moving assembly 142 during moving may cause the vacuum belt 114 to move, thereby regulating the tension of the vacuum belt 114. For example, the moving direction of the moving assembly 142 is perpendicular to the surface of the vacuum belt 114, in other words, the moving direction of the moving assembly 142 is perpendicular to the transport direction of the vacuum belt 114, thereby regulating the tension of the vacuum belt 114 in the transport direction.

In other implementations, the tension adjusting assembly 14 may be the rotating shaft around which the vacuum belt 114 is wrapped, and the tension of the vacuum belt 114 may be regulated by regulating the distance between the rotating shafts.

Please continue to refer to FIG. 6, in some more specific implementations, the moving assembly 142 comprises a mounting block 1421 and a controlling roller 1422. The mounting block 1421 is movably provided on the bracket 141; the controlling roller 1422 is connected to the mounting block 1421, the vacuum belt 114 is connected to the controlling roller 1422, and the mounting block 1421 causes the controlling roller 1422 to move, so as to regulate the tension of the vacuum belt 114.

By connecting the controlling roller 1422 with the mounting block 1421 and movably providing the mounting block 1421 on the bracket 141, the mounting block 1421 moves on the bracket 141 to cause the controlling roller 1422 to move, so as to regulate the tension of the vacuum belt 114.

In other more specific implementations, a sliding channel may be provided on the bracket 141, and the controlling roller 1422 may be slidably provided within the sliding channel and move along the sliding channel.

Please continue to refer to FIG. 6, in some more specific implementations, the moving assembly 142 further comprises an elastic member 1423 connected between the mounting block 1421 and the bracket 141 to drive the mounting block 1421 to move.

The elastic member 1423 is used for applying a force to the mounting block 1421 to drive the mounting block 1421 to move, so as to cause the controlling roller 1422 to move, thereby causing the vacuum belt 114 to move and achieving the objective of regulating the tension of the vacuum belt 114. Alternatively, the elastic member 1423 may be configured as a spring with one end thereof connected to the bracket 141 and the other end thereof connected to the mounting block 1421, and the spring is continuously in a compressed state to apply an elastic force to the mounting block 1421. The mounting block 1421 is moved under the elastic force so as to regulate the tension of the vacuum belt 114.

In other more specific implementations, the controlling roller 1422 may be caused to move by manually regulating the position of the mounting block 1421 for the purpose of regulating the tension of the vacuum belt 114.

Please refer to FIG. 1 again, in the present embodiment, further comprising a third conveying mechanism 15 provided at a side, distal to the first conveying mechanism 11, of the second conveying mechanism 12 located at the first position 121, and the conveying end 125 conveys the pole piece to the third conveying mechanism 15 when the second conveying mechanism 12 moves to the first position 121.

The second conveying mechanism 12 conveys the qualified pole piece to the third conveying mechanism 15, and the third conveying mechanism 15 conveys the qualified pole piece to the subsequent procedure for subsequent processing of the qualified pole piece. By providing the third conveying mechanism 15 to convey the qualify pole piece, it is possible to avoid the situation where the transmission accuracy is inaccurate, which affects the processing effect of the subsequent procedure, due to the offset position after the second conveying mechanism 12 moves from the second position 122 to the first position 121.

The present disclosure provides a stacking device (not shown in the figure) comprising the above transporting apparatus 1. The above transporting apparatus 1, while providing the functionality of conveying the qualified pole piece and removing the scrap pole piece, eliminates the occurrence of material blockages in the transporting apparatus 1, so as to improve the efficiency of removing the scrap pole piece and simultaneously improve the efficiency of conveying the qualified pole piece, thereby improving the efficiency of processing the pole piece by the stacking device. In addition, by eliminating the occurrence of material blockages in the transporting apparatus 1, it is possible to prolong the service life of the transporting apparatus 1 and the stacking device.

Finally, it should be noted that: the above embodiments are solely for the purpose of illustrating the technical solutions of the present disclosure, rather than limiting them; although the present disclosure has been described in detail with reference to the foregoing embodiments, those skilled in the art should understand that they may still modify the technical solutions recorded in the foregoing embodiments, or make equivalent substitutions for some or all of the technical features therein; and such modifications or substitutions do not deviate the essence of the corresponding technical solutions from the scope of the technical solutions of the embodiments of the present disclosure.

## Claims

1. A transporting apparatus, **characterized by** comprising:
a first conveying mechanism provided with a first conveying surface, a first end and a second end, the first conveying surface being configured for conveying a pole piece in a direction from the first end toward the second end; and
a second conveying mechanism which is provided at a side of the second end distal to the first end and is reciprocally movable between a first position and a second position, the second conveying mechanism being provided with a second conveying surface, a receiving end and a conveying end, and the second conveying surface being configured for conveying the pole piece in a direction from the receiving end toward the conveying end;
when the second conveying mechanism is located at the first position, a plane where the second conveying surface is located is coplanar with a plane where the first conveying surface is located, and the pole piece is conveyed to the conveying end by the second end via the receiving end, and is output by the conveying end;
when the second conveying mechanism is located at the second position, the plane where the second conveying surface is located is parallel to or intersects with the plane where the first conveying surface is located, and the pole piece is output by the second end or the second conveying mechanism.

2. The transporting apparatus according to claim 1, wherein each of the first conveying mechanism and the second conveying mechanism comprises:
a vacuum belt configured for adsorbing and conveying the pole piece, the first conveying surface being located on the vacuum belt of the first conveying mechanism, and the second conveying surface being located on the vacuum belt of the second conveying mechanism;
the transporting apparatus further comprises:
a scrap box, to which the pole piece is output by the second end or the second conveying mechanism when the second conveying mechanism is at the second position.

3. The transporting apparatus according to claim 2, wherein
the second end conveys the pole piece to the receiving end when the second conveying mechanism moves to the first position; and
the receiving end moves away from the second end and a gap is formed between the receiving end and the second end when the second conveying mechanism moves to the second position.

4. The transporting apparatus according to claim 3, wherein the second conveying mechanism is movable between the first position and the second position along a first direction, the first direction being perpendicular to a direction from the first end towards the second end.

5. The transporting apparatus according to claim 4, wherein the pole piece is output to the scrap box through the gap by the second end when the second conveying mechanism is located at the second position.

6. The transporting apparatus according to claim 4, wherein when the second conveying mechanism is located at the second position, the pole piece is conveyed to the second conveying surface by the second end, and output to the scrap box by the conveying end.

7. The transporting apparatus according to claim 4, wherein when the second conveying mechanism is located at the second position, the pole piece is conveyed to the second conveying surface by the second end, and output to the scrap box by the receiving end.

8. The transporting apparatus according to claim 3, wherein the second conveying mechanism is rotatably provided downstream of the first conveying mechanism, and when the second conveying mechanism rotates to the second position, the pole piece located at the first conveying surface is output into the scrap box through the gap by the second end, and the pole piece located at the second conveying surface is output into the scrap box by the conveying end.

9. The transporting apparatus according to claim 2, wherein the second conveying mechanism is rotatably provided at a side of the second end distal to the first end;
the scrap box is provided at a side of the conveying end distal to the receiving end, and when the second conveying mechanism rotates to the second position, the pole piece is conveyed to the receiving end by the second end, and then conveyed into the scrap box via the conveying end.

10. The transporting apparatus according to claim 9, wherein the first conveying mechanism and the second conveying mechanism share one vacuum belt.

11. The transporting apparatus according to claim 10, **characterized by** further comprising:
a tension adjusting assembly connected to the vacuum belt to regulate tension of the vacuum belt.

12. The transporting apparatus according to claim 11, wherein the tension adjusting assembly comprises:
a bracket; and
a moving assembly movably provided on the bracket, wherein the vacuum belt is connected to the moving assembly, and the moving assembly regulates tension of the vacuum belt during moving.

13. The transporting apparatus according to claim 12, wherein the moving assembly comprises:
a mounting block movably provided on the bracket; and
a controlling roller connected to the mounting block, the vacuum belt is connected to the controlling roller, and the mounting block causes the controlling roller to move, so as to regulate the tension of the vacuum belt.

14. The transporting apparatus according to claim 13, wherein the moving assembly further comprises:
an elastic member connected between the mounting block and the bracket to drive the mounting block to move.

15. The transporting apparatus according to any one of claims 1 to 14, **characterized by** further comprising:
a third conveying mechanism provided at a side, distal to the first conveying mechanism, of the second conveying mechanism located at the first position, the conveying end conveys the pole piece to the third conveying mechanism when the second conveying mechanism moves to the first position.

16. A stacking device, **characterized by** comprising the transporting apparatus according to any one of claims 1 to 15.
